# EUROPÄISCHE PATENTSCHRIFT

(11) **EP 1 098 176 B1**
(45) Veröffentlichungstag und Bekanntmachung des Hinweises auf die Patenterteilung: **31.03.2004**
(21) Anmeldenummer: 00122198.5
(22) Anmeldetag: 13.10.2000
(51) Int. Cl.: G01F 23/284

(54) **Füllstandsmessgerät**
Level indicator
Détecteur de niveau

(30) Priorität: 08.11.1999 DE 19953709; 04.12.1999 DE 19958584
(43) Veröffentlichungstag der Anmeldung: 09.05.2001
(73) Patentinhaber: Krohne S.A., 26103 Romans - Cedex (FR)
(72) Erfinder: Neven, Joseph, 26540 Mours (FR); Bletz, Achim, 07300 Tournon sur Rhone (FR)
(74) Vertreter: Gesthuysen, von Rohr & Eggert

(56) Entgegenhaltungen:
- WO-A-98/24013
- US-A- 3 812 422
- US-A- 4 924 700
- US-A- 5 898 308
- US-A- 5 943 908

## Beschreibung

Die Erfindung betrifft ein Füllstandsmeßgerät, das nach dem Radarprinzip arbeitet, zum Messen des Füllstands des unteren Mediums von zwei in einem Behälter eingefüllten, übereinander geschichteten Medien, mit einem im wesentlichen gerade verlaufenden und in das untere Medium hineinragenden ersten elektrischen Leiter, wobei der erste elektrische Leiter hohl ist und einen Innenleiter aufweist, der gegenüber dem ersten elektrischen Leiter elektrisch isoliert ist, mit einem an dem außerhalb des unteren Mediums und des oberen Mediums vorgesehenen Ende des ersten elektrischen Leiters vorgesehenen Generator zum Erzeugen und Aussenden eines elektromagnetischen Signals in den Innenleiter und mit einem an dem außerhalb des ersten Mediums und des zweiten Mediums vorgesehenen Endes des ersten elektrischen Leiters vorgesehenen Meßumformer zum Detektieren eines reflektierten Anteils des elektromagnetischen Signals.

Ein Füllstandsmeßgerät der zuvor beschriebenen Art ist z. B. aus der US 5,943,908 bekannt. Das Meßverfahren eines Füllstandsmeßgeräts, das nach dem Radarprinzip arbeitet, basiert auf dem TDR-Meßprinzip (Time Domain Reflectometry), das z. B. aus dem Bereich der Kabelprüfung bekannt ist und Ähnlichkeiten mit der Funktionsweise von Radargeräten aufweist. Bei einem solchen TDR-Füllstandsmeßgerät wird z. B. ein extrem kurzer elektrischer Impuls geführt über zwei im wesentlichen gerade verlaufende elektrische Leiter in einen Behälter ausgesandt, in dem sich ein Medium, wie eine Flüssigkeit, ein Pulver oder ein Granulat befindet, dessen Füllstandshöhe bestimmt werden soll.

Bei dem aus der zuvor genannten US 5,943,908 bekannten Füllstandsmeßgerät sowie bei den aus der US 5,898,308 sowie der US 3,812,422 bekannten Füllstandsmeßgeräten ist als erster Leiter ein metallisches Hohlrohr vorgesehen, in dessen Innenraum als zweiter Leiter ein von dem metallischen Hohlrohr isolierter Innenleiter verläuft. Die Medien können durch entsprechende Öffnungen hindurch in den Raum zwischen dem Hohlrohr und dem Innenleiter gelangen, so daß ein zwischen den beiden Leitern propagierendes elektromagnetisches Signal an den Grenzflächen zwischen zwei unterschiedlichen Medien, abhängig von deren Dielektrizitätszahlen, reflektiert wird. Bei dem aus der WO 98/24013 bekannten Füllstandsmeßgerät sind als erster bzw. zweiter Leiter zwei parallel zueinander verlaufende Leiterstäbe vorgesehen.

Grundsätzlich gilt bei den zuvor genannten Füllstandsmeßgeräten, daß der über die beiden elektrischen Leiter in den Behälter ausgesandte kurze elektrische Impuls an der Oberfläche des Mediums reflektiert und der reflektierte Anteil des kurzen elektrischen Impulses von einem Meßumformer des Meßgeräts wieder detektiert wird. Der reflektierte Anteil des kurzen elektrischen Impulses hängt von der Dielektrizitätszahl des Mediums ab und steigt mit dieser. Dabei ist die Laufzeit des Signals proportional zum Abstand des Impulsgenerators bzw. des Meßumformers zur Oberfläche des in dem Behälter befindlichen Mediums. Sich verändernde Umgebungsbedingungen, wie ein steigender oder fallender Umgebungsdruck oder eine steigende oder fallende Temperatur, beeinträchtigen die Meßgenauigkeit des TDR-Füllstandsmeßgeräts nicht. Außerdem ist die Laufzeit des Signals unabhängig von der Dielektrizitätszahl des Mediums, dessen Füllstand gemessen werden soll.

Über die zuvor beschriebene Füllstandsmessung eines in einem Behälter befindlichen Mediums hinaus gibt es jedoch auch derartige Anwendungen, bei denen der jeweilige Füllstand zweier übereinander geschichteter Medien bestimmt werden soll. Solche übereinander geschichteten Konfigurationen können dann auftreten, wenn die Medien voneinander verschiedene Dichten aufweisen. Unproblematisch ist eine solche Messung mit einem herkömmlichen, an der Oberseite des Behälters vorgesehenen TDR-Füllstandsmeßgerät nur dann durchführbar, wenn das Medium mit der geringeren Dichte auch die geringere Dielektrizitätszahl aufweist, das oben liegende Medium also eine geringere Dielektrizitätszahl aufweist als das Medium darunter.

In dem zuvor beschriebenen Fall wird die Messung z. B. derart durchgeführt, daß, wie bei einer normalen Füllstandsmessung, in dem Generator ein kurzer elektrischer Impuls erzeugt und über die beiden elektrischen Leiter, die in die übereinander geschichteten Medien hineinragen, in diese hineingeleitet wird. Dabei findet einerseits an der Oberfläche des oberen Mediums eine Reflektion eines gewissen Anteils des kurzen elektrischen Impulses und andererseits ein Eindringen des restlichen Anteils des kurzen elektrischen Impulses in das obere Medium und ein damit verbundenes Weiterlaufen des restlichen Anteils in diesem statt, wobei die Ausbreitungsgeschwindigkeit des durch das obere Medium hindurchlaufenden Restimpulses der Dielektrizitätszahl des oberen Mediums entsprechend verringert ist. Der in dem oberen Medium weiterlaufende Anteil des kurzen elektrischen Impulses wird schließlich an der Grenzfläche zwischen dem oberen Medium und dem unteren Medium wiederum teilweise reflektiert, und teilweise dringt ein geringer Anteil des Restimpulses auch noch in das untere Medium ein. Aufgrund der großen Dielektrizitätszahl des unteren Mediums jedoch wird der größte Anteil des durch das obere Medium hindurchlaufenden Restimpulses an der Grenzfläche zwischen dem oberen Medium und dem unteren Medium reflektiert, so daß dieser reflektierte Restimpuls schließlich mit dem Meßumformer detektiert werden kann. Bei bekannter Dielektrizitätszahl des oberen Mediums lassen sich somit einerseits die Füllstandshöhe des oberen Mediums und andererseits die Füllstandshöhe des unteren Mediums bestimmen.

Liegt jedoch ein Fall vor, bei dem das obere Medium die größere Dielektrizitätszahl aufweist, so ist der reflektierte Anteil des kurzen elektrischen Impulses an dessen Oberfläche typischerweise so groß, daß der Anteil des kurzen elektrischen Impulses, der tatsächlich in das obere Medium eindringt und dann an der Grenzfläche zwischen dem oberen Medium und dem unteren Medium reflektiert werden könnte, für eine verläßliche TDR-Messung meistens zu gering ist. In einem solchen Fall kann eine Messung mit einem herkömmlichen TDR-Füllstandsmeßgerät oft nur dann durchgeführt werden, wenn das TDR-Füllstandsmeßgerät nicht an der Oberseite des Behälters, sondern an dessen Unterseite angeordnet ist. Nur dann nämlich "sieht" der kurze elektrische Impuls zuerst das Medium mit der geringeren Dielektrizitätszahl, bevor er auf das Medium mit der größeren Dielektrizitätszahl trifft, an dessen Grenzfläche zu dem Medium mit der geringeren Dielektrizitätszahl der wesentliche Anteil des kurzen elektrischen Impulses reflektiert wird. Die Anordnung eines TDR-Füllstandsmeßgeräts unter dem Behälter ist jedoch konstruktiv sehr aufwendig, wenn überhaupt möglich, und weist gravierende sicherheitstechnische Nachteile auf.

Es ist somit die Aufgabe der Erfindung, ein an der Oberseite eines Behälters anbringbares Füllstandsmeßgerät, das nach dem Radarprinzip arbeitet, anzugeben, mit dem die Füllstandshöhe des unteren von zwei in dem Behälter übereinander geschichteten Medien mit gutem Signal-zu-Rausch-Verhältnis meßbar ist, wenn das obere Medium mit der geringeren Dichte eine größere Dielektrizitätszahl als das untere Medium aufweist.

Das erfindungsgemäße Füllstandsmeßgerät, mit dem die zuvor hergeleitete und aufgezeigte Aufgabe gelöst ist, ist im Anspruch 1 dargestellt und ist dadurch gekennzeichnet daß ein zweiter, im wesentlichen gerader elektrischer Leiter vorgesehen ist, der von dem ersten elektrischen Leiter elektrisch isoliert ist und außerhalb des ersten Leiters parallel zu diesem verläuft, der Innenleiter an dem im unteren Medium vorgesehen Ende des ersten elektrischen Leiters mit dem zweiten elektrischen Leiter elektrisch leitend verbunden ist und der erste elektrische Leiter an dem im unteren Medium vorgesehenen Ende eine Dichtung aufweist, um das Innere des ersten elektrischen Leiters abzudichten. Die starke Reflektion des elektromagnetischen Signals an dem Übergang auf das obere Medium mit der großen Dielektrizitätszahl wird somit für die Messung ausgenutzt und führt nicht, wie bei den herkömmlichen TDR-Füllstandsmeßgeräten, zu einer Schwächung des elektromagnetischen Signals, bevor dieses das untere Medium erreicht.

Vorzugsweise ist der erste elektrische Leiter als biegesteifer Hohlstab ausgebildet. Die Isolation zwischen dem ersten Leiter und dem Innenleiter kann alleine darin bestehen, daß der Innenleiter in dem ersten elektrischen Leiter im Abstand von dessen Innenfläche angeordnet ist. Vorzugsweise ist jedoch vorgesehen, daß in dem ersten elektrischen Leiter um dessen Innenleiter herum eine Isolationshülse - vorzugsweise aus PTFE - vorgesehen ist. Es ist besonders bevorzugt, wenn die Anordnung des Innenleiters in dem ersten elektrischen Leiter derart ausgebildet ist, daß im wesentlichen über die gesamte Länge des Innenleiters bzw. des erste elektrischen Leiters eine gleichmäßige Impedanz vorherrscht.

Um die Stabilität des erfindungsgemäßen TDR-Füllstandsmeßgeräts zu erhöhen, ist vorzugsweise vorgesehen, daß zwischen dem ersten elektrischen Leiter und dem zweiten elektrischen Leiter wenigstens eine Querverbindung vorgesehen ist. Solche Querverbindungen müssen im allgemeinen selbstverständlich elektrisch isolierend ausgebildet sein. Gemäß einer bevorzugten Weiterbildung des erfindungsgemäßen TDR-Füllstandsmeßgeräts ist jedoch vorgesehen, daß die Querverbindung an dem im unteren Medium vorgesehenen Ende des ersten elektrischen Leiters bzw. des zweiten elektrischen Leiters vorgesehen ist, die dann dazu verwendet werden kann, eine von dem ersten elektrischen Leiter isolierte elektrische Verbindung zwischen dem Innenleiter und dem zweiten elektrischen Leiter zu bilden.

Schließlich besteht eine bevorzugte Weiterbildung des erfindungsgemäßen TDR-Füllstandsmeßgeräts darin, daß die Dichtung am im unteren Medium vorgesehenen Ende des ersten Leiters aus PTFE und/oder Viton® besteht.

Im einzelnen gibt es nun eine Vielzahl von Möglichkeiten, das erfindungsgemäße TDR-Füllstandsmeßgerät auszugestalten und weiterzubilden. Dazu wird einerseits auf die dem Patentanspruch 1 nachgeordneten Patentansprüche und andererseits auf die detaillierte Beschreibung eines bevorzugten Ausführungsbeispiels der Erfindung in Verbindung mit der Zeichnung verwiesen. In der Zeichnung zeigt
- Fig. 1: schematisch die Anordnung eines TDR-Füllstandsmeßgeräts an der Oberseite eines Behälters gemäß einem bevorzugten Ausführungsbeispiel der Erfindung und
- Fig. 2: schematisch den Meßablauf mit einem TDR-Füllstandsmeßgerät gemäß einem bevorzugten Ausführungsbeispiel der Erfindung.

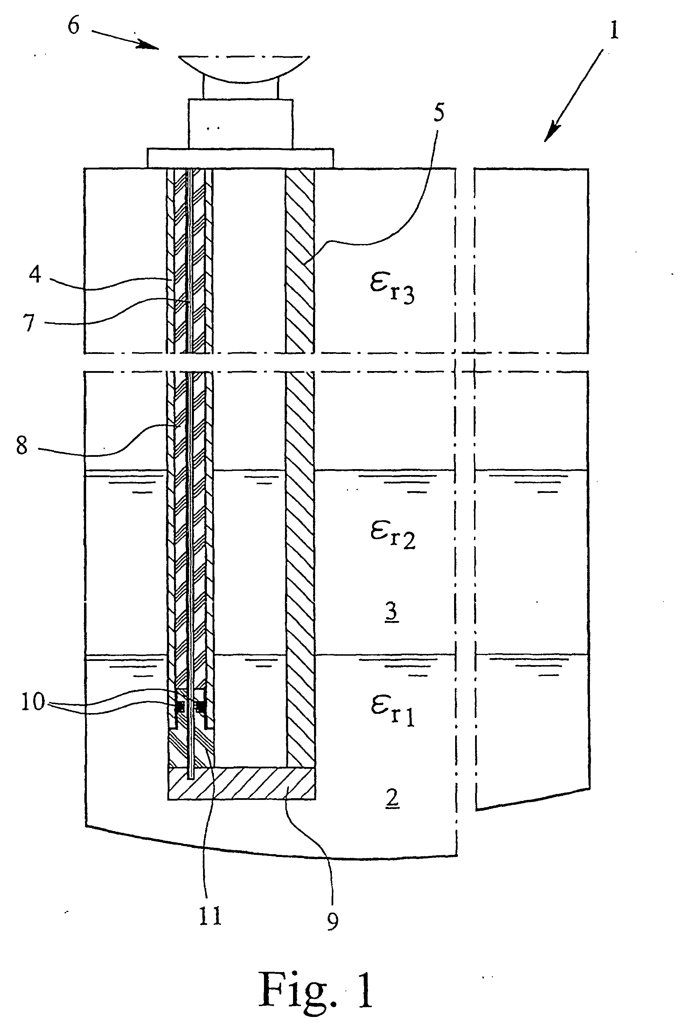

Aus Fig. 1 ist im Schnitt schematisch ein TDR-Füllstandsmeßgerät gemäß einem bevorzugten Ausführungsbeispiel der Erfindung ersichtlich, das an der Oberseite eines Behälters 1 angeordnet ist, in den ein Medium 2 eingefüllt ist, über das ein Medium 3 geschichtet ist. Die Dielektrizitätszahl εᵣ₁ des unteren Mediums 2 ist geringer als die Dielektrizitätszahl εᵣ₂ des oberen Mediums 2. εᵣ₂ liegt bei typischen Anwendungen des erfindungsgemäßen Füllstandsmeßgeräts bei Werten von 20 und darüber. Über dem oberen Medium 3 befindet sich ein Gas, wie z. B. Luft, mit einer Dielektrizitätszahl von εᵣ₃. Das TDR-Füllstandsmeßgerät gemäß dem bevorzugten Ausführungsbeispiel der Erfindung weist einen ersten elektrischen Leiter 4 und einen zweiten elektrischen Leiter 5 auf. An deren außerhalb des Mediums 2 vorgesehenen Enden ist ein nur teilweise angedeutetes Meßgerätegehäuse 6 des TDR-Füllstandsmeßgeräts angeordnet. Das Meßgerätegehäuse 6 beherbergt einen nicht weiter dargestellten Generator zum Erzeugen und Aussenden eines elektromagnetischen Signals, gemäß vorliegend beschriebenem bevorzugten Ausführungsbeispiel nämlich eines kurzen elektrischen Impulses für die TDR-Füllstandsmessung, sowie einen nicht weiter dargestellten Meßumformer zum Detektieren eines reflektierten Anteils des kurzen elektrischen Impulses.

In dem ersten elektrischen Leiter 4 ist ein Innenleiter 7 vorgesehen, der von der Innenwand des ersten elektrischen Leiters 4 mittels einer Isolationshülse 8 aus PTFE isoliert ist. Der Innenleiter 7 ist über eine Querverbindung 9 elektrisch leitend mit dem zweiten elektrischen Leiter 5 an dessen in dem Medium 2 vorgesehenen Ende verbunden. Ein mit einer Dichtung 10 versehenes Distanzstück 11 dient einerseits der Abdichtung des Inneren des ersten elektrischen Leiters 4 und andererseits der elektrischen Isolation des ersten elektrischen Leiters 4 von dem Innenleiter 7 und dem zweiten elektrischen Leiter 5. Der erste elektrische Leiter 4, der zweite elektrische Leiter 5 sowie die Querverbindung 9 bestehen aus Edelstahl, so daß der elektrische Leiter 4 einen biegesteifen metallischen Hohlstab bildet. Ein von dem Generator erzeugter kurzer elektrischer Impuls kann somit in den Innenleiter 7 in dem ersten elektrischen Leiter 4 eingekoppelt werden und bis zu dessen in dem Medium 2 vorgesehenen Ende durchlaufen, ohne daß der kurze elektrische Impuls in Kontakt mit dem Medium 2 oder mit dem Medium 3 tritt. Seine Ausbreitungsgeschwindigkeit beträgt somit Lichtgeschwindigkeit. Am im Medium 2 vorgesehenen Ende des ersten elektrischen Leiters 4 wird der kurze elektrische Impuls dann aus dem Innenleiter 7 über die Querverbindung 9 auf den zweiten elektrischen Leiter 5 ausgekoppelt. Der bisher nach unten verlaufende kurze elektrische Impuls wird aus dem Innenleiter 7 kommend an der Querverbindung 9 quasi nach oben gespiegelt und kehrt somit seine Laufrichtung um. Die Querverbindung dient praktisch als "Spiegel" zum Umkehren der Laufrichtung des kurzen elektrischen Impulses. Der kurze elektrische Impuls läuft daraufhin zwischen dem zweiten elektrischen Leiter 5 und dem dann als Referenzleiter dienenden ersten elektrischen Leiter 4 in dem unteren Medium 2 nach oben, so daß seine Ausbreitungsgeschwindigkeit entsprechend der Dielektrizitätskonstanten εᵣ₁ des unteren Mediums verringert ist.

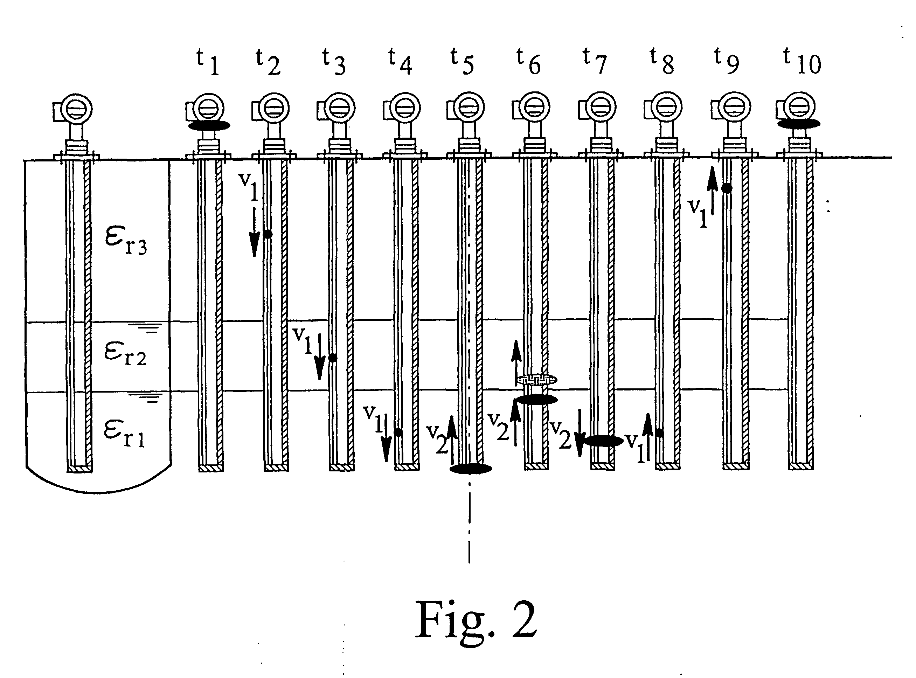

Der eigentliche Meßablauf einer TDR-Füllstandsmessung mit einem TDR-Füllstandsmeßgerät gemäß einem bevorzugten Ausführungsbeispiel der Erfindung ist schematisch in zeitlich aufeinander folgenden Teilschritten t₁ bis t₁₀ aus Fig. 2 ersichtlich. Zu einem Zeitpunkt t₁ wird von dem in dem Meßgerätegehäuse 6 angeordneten Generator ein kurzer elektrischer Impuls erzeugt. Dieser kurze elektrische Impuls wird dann ohne elektrischen Kontakt mit dem ersten elektrischen Leiter 4 in den in diesem isoliert geführten Innenleiter 7 eingekoppelt. Praktisch wird somit der Innenleiter der Koaxialleitung, die zur Weiterleitung des von dem Impulsgenerator her kommenden kurzen elektrischen Impulses dient, direkt mit dem Innenleiter 7 verbunden. Der Innenleiter 7 zusammen mit dem ersten elektrischen Leiter 4 bilden für den kurzen elektrischen Impuls somit eine Weiterführung der von dem Generator her kommenden Koaxialleitung. Der kurze elektrische Impuls läuft dann mit Lichtgeschwindigkeit v₁ im Inneren des ersten elektrischen Leiters 4 bis zu dessen im unteren Medium 2 vorgesehenen Ende. Wie aus den Darstellungen für die Zeitpunkte t₂, t₃ und t₄ ersichtlich, beträgt die Ausbreitungsgeschwindigkeit des kurzen elektrischen Impulses in dem ersten elektrischen Leiter 4 immer Lichtgeschwindigkeit v₁ unabhängig davon, wo sich der kurze elektrische Impuls gerade befindet, d. h. von welchem Medium der erste elektrische Leiter 4 jeweils umgeben ist, da der kurze elektrische Impuls in dem ersten elektrischen Leiter 4 mit den diesen umgebenden äußeren Medien nicht in Kontakt tritt. Zum Zeitpunkt t₅ erreicht der kurze elektrische Impuls dann das im unteren Medium 2 vorgesehene Ende des ersten elektrischen Leiters 4; er wird dort auf den zweiten elektrischen Leiter 5 ausgekoppelt, der mit dem Innenleiter 7 über die Querverbindung 9 elektrisch leitend verbunden ist. Der kurze elektrische Impuls breitet sich dann mit der entsprechend der Dielektrizitätszahl εᵣ₁ des unteren Mediums 2 verringerten Geschwindigkeit v₂ weiter aus und läuft zwischen dem ersten elektrischen Leiter 4 und dem zweiten elektrischen Leiter 5 nach oben. Zum Zeitpunkt t₆ erreicht der kurze elektrische Impuls die Grenzfläche zwischen dem unteren Medium 2 und dem darüber geschichteten Medium 3. Aufgrund der großen Dielektrizitätskonstanten εᵣ₂ des Mediums 3 von typischerweise über 20 dringt lediglich ein geringer Anteil des kurzen elektrischen Impulses in das Medium 3 ein, während der größte Anteil des kurzen elektrischen Impulses an der Grenzfläche zwischen dem Medium 2 und dem Medium 3 reflektiert wird und wieder mit der Geschwindigkeit v₂ entsprechend der Dielektrizitätskonstante εᵣ₁ des Mediums 2 nach unten läuft. Am im Medium 2 vorgesehenen Ende des ersten elektrischen Leiters 4 wird dann der reflektierte Anteil des kurzen elektrischen Impulses wieder in den Innenleiter 7 in dem ersten elektrischen Leiter 4 eingekoppelt, und er läuft dann auf dem Innenleiter 7 die gesamte Strecke von dem im Medium 2 vorgesehenen Ende des ersten elektrischen Leiters 4 bis zum im Meßgerätegehäuse 6 vorgesehenen Meßumformer mit Lichtgeschwindigkeit v₁ durch. Zum Zeitpunkt t₁₀ schließlich wird der reflektierte Anteil des elektrischen Impulses von dem Meßumformer detektiert.

Da die Länge des ersten elektrischen Leiters, d. h. der Abstand vom Generator bzw. vom Meßumformer bis zum im Medium 2 vorgesehenen Ende des ersten elektrischen Leiters 4, die Dielektrizitätskonstante εᵣ₁ des unteren Mediums 2 sowie die Lichtgeschwindigkeit v₁ bekannt sind, kann aus der Gesamtlaufzeit des kurzen elektrischen Impulses bzw. dessen reflektierten Anteils vom Generator bis zur Grenzschicht zwischen dem unteren Medium 2 und dem oberen Medium 3 und zurück zum Meßumformer auf die Füllstandshöhe des zweiten Mediums 2 rückgeschlossen werden.

Ist die Dielektrizitätskonstante εᵣ₁ des Mediums 2 nicht von vornherein bekannt, so kann diese mittels eines herkömmlichen TDR-Füllstandsmeßverfahrens bestimmt werden, wenn das Medium 3 noch nicht über dem Medium 2 liegt, mit einem anderen herkömmlichen Verfahren, wie z. B. einer kapazitiven Messung, festgestellt werden oder mit dem erfindungsgemäßen Verfahren bestimmt werden, wenn die Füllstandshöhe des unteren Mediums 2 bekannt ist. Somit sind die einzigen Kalibrierparameter bei der Installation des erfindungsgemäßen TDR-Füllstandsmeßgeräts die Dielektrizitätskonstante des unteren Mediums 2 sowie die Länge des ersten elektrischen Leiters 4.

Das zuvor beschriebene bevorzugte Ausführungsbeispiel der Erfindung betrifft ein TDR-Füllstandsmeßgerät bzw. eine TDR-Füllstandsmeßverfahren unter Verwendung von kurzen elektrischen Impulsen als elektromagnetisches Signal. Selbstverständlich ist die Erfindung auch mit einem Füllstandsmeßgerät bzw. einem Füllstandsmeßverfahren verwendbar, bei denen als elektromagnetisches Signal kontinuierliche elektromagnetische Wellen Vewendung finden, somit z. B. ein FMCW-Verfahren angewandt wird.

## Patentansprüche

1. Füllstandsmeßgerät, das nach dem Radarprinzip arbeitet, zum Messen des Füllstands des unteren Mediums von zwei in einem Behälter (1) eingefüllten, übereinander geschichteten Medien (2, 3), mit einem im wesentlichen gerade verlaufenden und in das untere Medium (2) hineinragenden ersten elektrischen Leiter (4), wobei der erste elektrische Leiter (4) hohl ist und einen Innenleiter (7) aufweist, der gegenüber dem ersten elektrischen Leiter (4) elektrisch isoliert ist, mit einem an dem außerhalb des unteren Mediums (2) und des oberen Mediums (3) vorgesehenen Ende des ersten elektrischen Leiters (4) vorgesehenen Generator zum Erzeugen und Aussenden eines elektromagnetischen Signals in den Innenleiter (7) und mit einem an dem außerhalb des ersten Mediums (2) und des zweiten Mediums (3) vorgesehenen Ende des ersten elektrischen Leiters (4) vorgesehenen Meßumformer zum Detektieren eines reflektierten Anteils des elektromagnetischen Signals, **dadurch gekennzeichnet, daß** ein zweiter, im wesentlichen gerader elektrischer Leiter (5) vorgesehen ist, der von dem ersten elektrischen Leiter (4) elektrisch isoliert ist und außerhalb des ersten Leiters (4) parallel zu diesem verläuft, der Innenleiter (7) an dem im unteren Medium (2) vorgesehen Ende des ersten elektrischen Leiters (4) mit dem zweiten elektrischen Leiter (5) elektrisch leitend verbunden ist und der erste elektrische Leiter (4) an dem im unteren Medium vorgesehenen Ende eine Dichtung (10) aufweist, um das Innere des ersten elektrischen Leiters (4) abzudichten.

2. Füllstandsmeßgerät nach Anspruch 1, **dadurch gekennzeichnet, daß** in dem ersten elektrischen Leiter (4) um dessen Innenleiter (7) herum eine Isolationshülse (8) - vorzugsweise aus PTFE - vorgesehen ist.

3. Füllstandsmeßgerät nach Anspruch 1 oder 2, **dadurch gekennzeichnet, daß** zwischen dem ersten elektrischen Leiter (4) und dem zweiten elektrischen Leiter (5) wenigstens eine Querverbindung (9) vorgesehen ist.

4. Füllstandsmeßgerät nach Anspruch 3, **dadurch gekennzeichnet, daß** die Querverbindung (9) zwischen dem im unteren Medium (2) vorgesehenen Ende des ersten elektrischen Leiters (4) und dem im unteren Medium (2) vorgesehenen Ende des zweiten elektrischen Leiters (5) vorgesehen ist.

5. Füllstandsmeßgerät nach Anspruch 4, **dadurch gekennzeichnet, daß** die Querverbindung (9) die von dem ersten elektrischen Leiter (4) isolierte elektrische Verbindung zwischen dem Innenleiter (7) und dem zweiten elektrischen Leiter (5) bildet.

6. Füllstandsmeßgerät nach einem der Ansprüche 1 bis 5, **dadurch gekennzeichnet, daß** der erste elektrische Leiter (4), der zweite elektrische Leiter (5), der Innenleiter (7) und/oder die Querverbindung (9) aus Edelstahl bestehen.

## Claims

1. Fill level measuring device that works according to the radar principle, for measuring the fill level of the lower medium of two media (2, 3) layered over one another, filled in a reservoir (1) having a first electric conductor (4) running essentially straight and jutting into the lower medium (2), wherein the first electric conductor (4) is hollow and has an internal conductor (7) that is isolated from the first electric conductor (4) having a generator provided on the end of the first electric conductor (4) provided outside of the lower medium (2) and the upper medium (3) for generating and emitting an electromagnetic signal in the internal conductor (7) and having a measuring transducer provided on the end of the first electric conductor (4) provided outside of the first medium (2) and the second medium (3) for detecting a reflected part of the electromagnetic signal, **characterized in that** a second, essentially straight electric conductor (5) is provided that is isolated from the first electric conductor (4) and runs parallel to and outside of the first conductor (4), that the internal conductor (7) is connected to the second electric conductor (5) at the end of the first electric conductor (4) provided in the lower medium (2) and the first electric conductor (4) has a seal (10) on the end provided in the lower medium for sealing the inside of the first electric conductor (4).

2. Fill level measuring device according to claim 1, **characterized in that** an isolation sleeve (8) - preferably of PTFE - is provided around the internal conductor (7) of the first electric conductor (4).

3. Fill level measuring device according to claim 1 or 2, **characterized in that** at least one transverse connection (9) is provided between the first electric conductor (4) and the second electric conductor (5).

4. Fill level measuring device according to claim 3, **characterized in that** the transverse connection (9) is provided between the end of the first conductor (4) provided in the lower medium (2) and the end of the second conductor (5) provided in the lower medium (2).

5. Fill level measuring device according to claim 4, **characterized in that** the transverse connection (9) forms the electric connection isolated from the first electric conductor (4) between the internal conductor (7) and the second electric conductor (5).

6. Fill level measuring device according to any one of claims 1 to 5, **characterized in that** the first electric conductor (4), the second electric conductor (5), the internal conductor (7) and/or the transverse connection (9) are made of stainless steel.

## Revendications

1. Indicateur de niveau qui travaille conformément au principe du radar, pour mesurer le niveau du milieu du bas parmi deux milieux superposés (2, 3) qui ont été introduits dans un récipient (1), comprenant un premier conducteur électrique (4) s'étendant essentiellement en direction rectiligne et pénétrant dans le milieu du bas (2), le premier conducteur électrique (4) étant creux et présentant en un conducteur interne (7) qui est isolé électriquement par rapport au premier conducteur électrique (4), une génératrice prévue à l'extrémité du premier conducteur électrique (4) prévue à l'extérieur du milieu du bas (2) et du milieu du haut (3), pour générer et émettre un signal électromagnétique dans le conducteur interne (7), et un convertisseur de mesure prévu à l'extrémité du premier conducteur électrique (4) prévue à l'extérieur du premier milieu (2) et du deuxième milieu (3) pour détecter une fraction réfléchie du signal électromagnétique, **caractérisé en ce qu'**on prévoit un deuxième conducteur électrique (5) essentiellement rectiligne, qui est isolé électriquement par rapport au premier conducteur électrique (4) et qui s'étend à l'extérieur du premier conducteur (4), parallèlement à ce dernier, le conducteur interne (4) étant relié, à l'extrémité du premier conducteur électrique (4), prévue dans le milieu du bas (2), au deuxième conducteur électrique (5) et le premier conducteur électrique (4) présentant, à l'extrémité prévue dans le milieu du bas, un dispositif d'étanchéité (10) pour rendre étanche l'intérieur du premier conducteur électrique (4).

2. Indicateur de niveau selon la revendication 1, **caractérisé en ce qu'**on prévoit, dans le premier conducteur électrique (4), une gaine d'isolation (8) - de préférence en PTFE - qui entoure le conducteur interne (7) du premier cité.

3. Indicateur de niveau selon la revendication 1 ou 2, **caractérisé en ce qu'**on prévoit, entre le premier conducteur électrique (4) et le deuxième conducteur électrique (5), au moins une liaison transversale (9).

4. Indicateur de niveau selon la revendication 3, **caractérisé en ce que** la liaison transversale (9) est prévue entre l'extrémité du premier conducteur électrique (4) prévue dans le milieu du bas (2) et l'extrémité du deuxième conducteur électrique (5) prévue dans le milieu du bas (2).

5. Indicateur de niveau selon al revendication 4, **caractérisé en ce que** la liaison transversale (9) forme la liaison électrique isolée à partir du premier conducteur électrique (4) entre le conducteur interne (7) et le deuxième conducteur électrique (5).

6. Indicateur de niveau selon l'une quelconque des revendications 1 à 5, **caractérisé en ce que** le premier conducteur électrique (4), le deuxième conducteur électrique (5), le conducteur interne (7) et/ou la liaison transversale (9) sont constitués d'acier spécial.
